# FASCICULE DE BREVET EUROPEEN

(11) **EP 1 967 773 B1**
(45) Date de publication et mention de la délivrance du brevet: **02.12.2009**
(21) Numéro de dépôt: 07290296.8
(22) Date de dépôt: 07.03.2007
(51) Int. Cl.: F16J 15/02, F16J 15/10, F16J 15/32, B29C 33/00, B29C 45/00

(54) **Joint en y, procédé de fabrication d'un tel joint et utilisation d'un tel joint pour réduire les efforts d'emboîtement d'un connecteur**
Y-Dichtung, Verfahren zur Herstellung einer solchen Dichtung und ihre Verwendung zum Verringern der aufgewendeten Kräfte beim Einstecken eines Verbinders
Y-Seal, method of manufacturing such a seal and its use to reduce the forces for fitting a connector

(43) Date de publication de la demande: 10.09.2008
(73) Titulaire: LE JOINT FRANCAIS, 75008 Paris (FR)
(72) Inventeur: Pradelle, Sébastien, 53200 Fromentières (FR)
(74) Mandataire: Jacquard, Philippe Jean-Luc

(56) Documents cités:
- EP-A- 0 783 082
- EP-A1- 0 945 655
- FR-A1- 2 649 354
- GB-A- 759 666
- GB-A- 1 331 448
- JP-A- 2001 254 832
- US-A- 2 914 345
- US-A- 2 916 306
- US-A- 4 182 519

## Description

La présente invention concerne un joint en y, un procédé de fabrication d'un tel joint et l'utilisation d'un tel joint pour réduire les efforts d'emboîtement d'un connecteur.

Avec la multiplication des connecteurs rapides, notamment dans le secteur automobile, le développement de solutions d'étanchéité influençant peu les efforts d'emboîtement de ces connecteurs devient un enjeu majeur. Ces exigences concernent l'ensemble des fluides comme par exemple le carburant (essence, diesel, biocarburant), le liquide de refroidissement, le liquide de frein, l'urée, l'air, ou l'huile. Certaines applications sont plus critiques de par la dimension des connecteurs, comme les connecteurs de conduits d'air principalement utilisés pour les moteurs diesel ou les connecteurs de conduits d'eau pour poids lourds par exemple.

Le joint le plus couramment utilisé dans ces connecteurs est le joint torique en raison de son faible coût. Cependant, les efforts d'emboîtement d'un connecteur équipé d'un tel joint sont élevés notamment lorsque la dimension du joint et/ou son serrage augmentent.

Les joints à lèvres classiques ou profilé présentent un coût de fabrication généralement élevé et nécessitent un logement complexe. Par ailleurs, la finesse de la lèvre le rend plus sensible au vieillissement thermique et au fluage que les solutions précédentes.

Enfin, des joint en Y sont déjà connus mais sont fabriqués à l'aide de moules à trois matrices (une matrice par branche du Y) qui sont délicats et coûteux à mettre en oeuvre. Par ailleurs ils conduisent à la formation de bavures de plan de joint dans des zones fonctionnelles pour le montage et/ou pour l'étanchéité (notamment le creux entre les lèvres supérieures du Y) qui nuisent au fonctionnement souhaité de ces zones. Ces joints n'ont donc pas été utilisés dans de tels raccords pour réduire les efforts d'emboîtement.

Le document EP 0 783 082 est considéré comme l'état de la technique le plus proche car il décrit un joint d'étanchéité comprenant des bavures de plan de joint entre la partie en « I » et la partie en « V ».

Il ressort de ce qui précède que plus la dimension du diamètre de passage du fluide est importante plus la dimension du joint augmente et plus les efforts d'emboîtement sont importants.

L'invention vise à proposer un joint pour connecteur rapide (encliquetage ou raccord) économique à fabriquer, apte à être utilisé en lieu et place d'un joint torique ou quadrilobe et ce sans modification des dimensions du logement de ces joints pour ne pas engendrer de coût de modification des pièces existantes, assurant une étanchéité dans une large gamme de pression de fluide tout en présentant des efforts d'emboîtement faibles situés préférentiellement entre 60-80N pour des diamètres de passage de grande dimension comme, par exemple, environ 50 mm.

Plus précisément, la présente invention a pour objet un joint d'étanchéité conformément aux caractéristiques de la revendication 1.

Selon des modes de réalisation préférés :
- le joint peut comprendre une base en « I » et une partie en « V » de longueurs axiales maximales (X/2) sensiblement égales, des bavures de plan de joint étant localisées entre la base en « I» et la partie en « V », sensiblement au milieu du joint.
- la partie en « V » déterminant une lèvre principale et une lèvre secondaire, le rapport entre la longueur nominale de la lèvre secondaire et la longueur nominale de la lèvre principale peut être choisi supérieur ou égal à 1,2 et au plus égal à 2 ;
- le rapport entre la longueur axiale de la lèvre principale et la longueur axiale de la lèvre secondaire peut être choisi strictement inférieur à 1, de préférence entre 0,6 et 0,9, typiquement entre 0,75 et 0,85 ;
- le rapport entre la distance du creux de la partie en « V » au plan de joint et la longueur nominale de la lèvre principale peut être compris entre 0,4 et 0,45 ;
- le joint d'étanchéité étant destiné à être inséré dans une gorge d'un premier embout du connecteur et à entrer en contact étanche avec une paroi de l'autre embout, le rapport entre la hauteur de la section du joint au niveau du plan de joint et la distance entre le fond de la gorge et la paroi de deuxième embout peut être choisi strictement inférieur à 1, de préférence entre 0,7 et 0,98, typiquement entre 0,8 et 0,9 ;
- le joint présentant une hauteur radiale maximale entre les deux lèvres, le taux de déformation de la lèvre principale peut être compris entre 18% et 22% de la hauteur radiale maximale ;
- le taux de déformation de la lèvre secondaire peut être inférieur au taux de déformation de la lèvre principale ;
- le taux de déformation de la lèvre secondaire peut être compris entre 9% et 11% de la hauteur radiale maximale ;
- la base en « I » et la lèvre principale peuvent former chacune respectivement un angle avec l'axe longitudinal du joint, l'angle de la base en « I » étant inférieur à l'angle de la lèvre principale ;
- l'angle de la base en « I » peut être supérieur ou égal à 2°, et l'angle de la lèvre principale peut être inférieur ou égal à 30° ;
- la base en « I » et la lèvre secondaire peuvent former entre elles un angle de telle sorte qu'une concavité est ménagée entre les extrémités libres de la base en « I » et de la lèvre secondaire ;
- la lèvre principale peut présenter une face d'extrémité libre sensiblement plane ;
- la lèvre secondaire peut présenter une face d'extrémité libre sensiblement plane ;
- la base en « I » peut présenter une face d'extrémité libre sensiblement plane ;
- la base en « I » peut présenter un lobe de calage destiner à entrer en contact avec un bord d'une gorge par contrainte du joint dans cette gorge ; et
- le matériau du joint peut être choisi parmi les matériau polymères, en particulier parmi le FPM, le HNBR, le AEM, le ACM, le NBR et le EPDM.

L'invention se rapporte également à une utilisation d'un joint précédent dans un connecteur de conduites de fluide comprenant un embout mâle et un embout femelle, pour réduire les efforts d'emboîtement des embouts mâle et femelle.

Selon des modes de réalisation préférés :
- le joint peut être disposé dans une gorge d'un embout de sorte que la lèvre secondaire prenne appui contre un fond de la gorge ; et
- le joint peut être disposé dans la gorge d'un embout de telle sorte que la partie en « V » soit disposée dans une direction opposée à la direction de circulation du fluide sous pression et que, lorsque le fluide circule, la lèvre principale et la lèvre secondaire se plaquent contre la gorge et l'autre embout de manière à renforcer l'étanchéité.

L'invention se rapporte également à un moule de fabrication du joint précédent, conformément aux caractéristiques de la revendication 21. Par exemple la profondeur des deux empreintes est sensiblement égale de manière à former des bavures de plan de joint sensiblement au milieu du joint.

Un procédé de fabrication du joint précédent met en oeuvre le moule précédent et comprend les étapes consistant à :
- plaquer les deux matrices l'une contre l'autre de sorte que les empreintes soient en regard l'une de l'autre,
- injecter ou mettre en place dans les empreintes du matériau polymère non réticulé,
- procéder à une réticulation au moins partielle dudit matériau polymère,
- démouler le joint en écartant les matrices l'une de l'autre mais pas avant que le niveau de réticulation du matériau polymère ne soit suffisant pour que les lèvres principales et secondaires puissent se déformer lors du démoulage et reprendre leur forme de moulage après le démoulage.

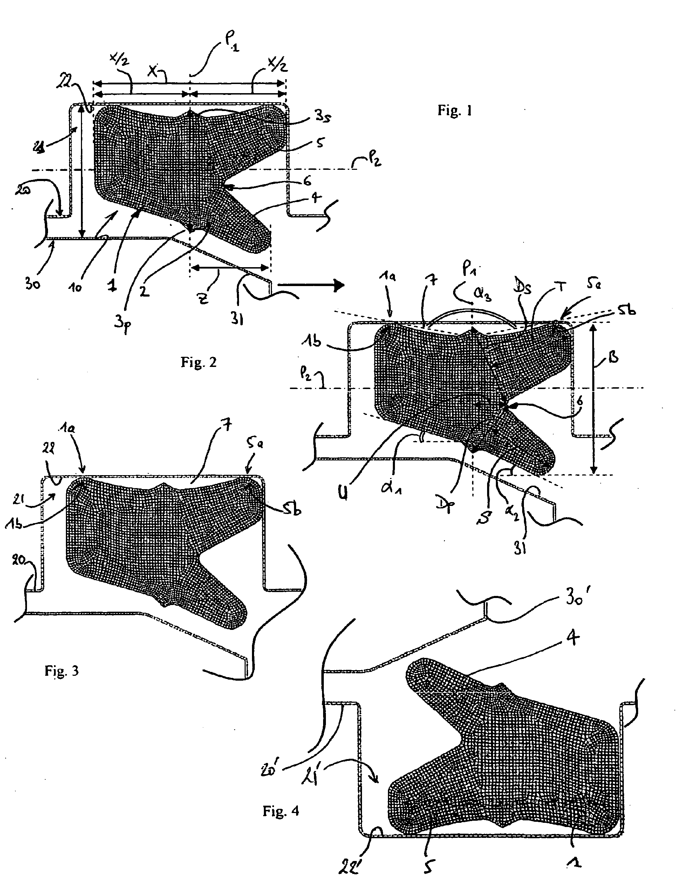

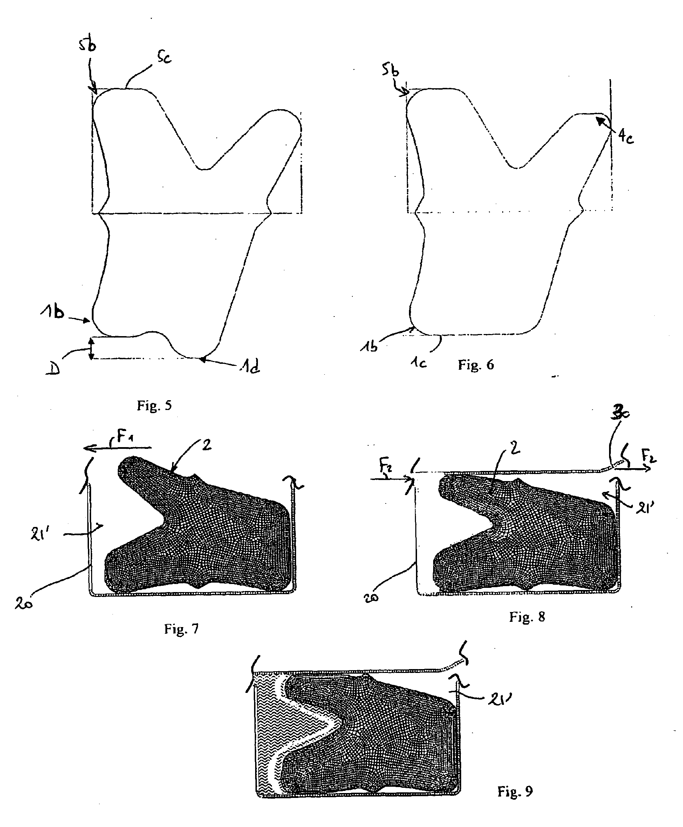

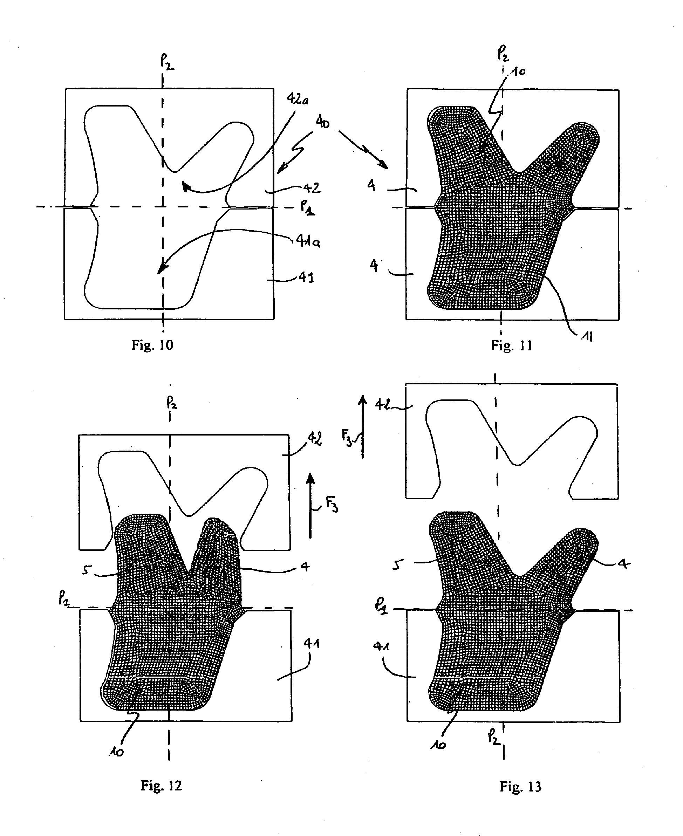

D'autres caractéristiques de l'invention ressortiront de la description détaillée ci-après faite en référence aux dessins annexés qui représentent, respectivement :
- en figures 1 à 3, des vues en coupe d'un joint selon l'invention monté « en alésage » ;
- en figure 4, une vue en coupe d'un joint selon l'invention monté « en piston » ;
- en figures 5 et 6, des vues en coupe de variantes de joint selon l'invention ;
- en figures 7 à 9, des vues en coupe d'un joint selon l'invention monté « en piston » avant emboîtement, après emboîtement et en utilisation avec un fluide circulant sous une pression de 3,5 bars ; et
- en figures 10 à 13, des vues en coupe du procédé de fabrication d'un joint selon l'invention.

Le joint décrit par la suite doit être en un matériau déformable élastiquement., De préférence, le matériau du joint peut être choisi parmi les matériau polymères, en particulier parmi le FPM (caoutchouc fluorocarboné), le HNBR (caoutchouc nitrile hydrogéné), le AEM (copolymère d'éthylène et d'acrylate de méthyle), le ACM (copolymère d'éthylacrylate (ou autre acrylate) et d'un copolymère apportant des sites réactifs pour la vulcanisation), le NBR (caoutchouc nitrile) et le EPDM (terpotymère d'éthylène, de propylène ou d'un diène).

En référence aux figures 1 à 3, un joint 10 selon l'invention présente une section axiale longitudinale en forme générale de « Y » et une longueur axiale X, la longueur axiale étant définie comme la longueur du joint en projection sur l'axe longitudinal P2 du joint 10.

Le joint 10 présente une base en « I » 1 et une partie en « V » 2 déterminant une lèvre principale 4 et une lèvre secondaire 5, les parties 1 et 2 étant séparées par des bavures 3p et 3s de plan de joint. Ces bavures sont alignées sur une droite P1 perpendiculaire à l'axe longitudinal P2 du joint 10. La droite P1 représente le plan de joint, c'est-à-dire, le plan de contact entre les deux matrices du moule (voir ci-après la description des figures 10 à 13). Dans le mode de réalisation illustré, la partie en « I ». 1 et la partie en « V » 2 présentent des longueurs axiales maximales X/2 sensiblement égales, c'est-à-dire que les bavures de plan de joint sont localisées entre la base en « I » et la partie en « V », sensiblement au milieu du joint 10.

Les bavures du plan de joint, qui sont des défauts inévitables de fabrication, sont ainsi localisées dans une partie du joint qui n'assure aucun rôle fonctionnel. Les lèvres principales 4 et secondaires 5 peuvent se déformer l'une vers l'autre sans être gênées par une bavure située dans le creux 6 qui les sépare. De même, la bavure n'influe pas sur l'étanchéité car elle se situe en dehors des zones de contact du joint avec la gorge 20 et l'embout 30.

Le joint est monté « en alésage » dans une gorge 21 d'un embout femelle 20, c'est-à-dire que le joint 10 étant circulaire, la lèvre principale 4 est dirigée vers le centre du joint 10 et que la lèvre secondaire 5 et la partie en « I » 1 sont comprimées contre le fond 22 de la gorge 21.

Le rapport entre la longueur axiale Z de la lèvre principale 4 et la longueur axiale X/2 de la lèvre secondaire 5 est choisie de préférence strictement inférieure à 1. Ce rapport X/2Z permet de réduire les risques de coincement de la lèvre principale dans la gorge 21 lors de l'emboîtement et de la déformation de cette lèvre, améliorant ainsi la qualité et l'efficacité du joint. Les meilleurs résultats sont obtenus pour un rapport X/2Z de préférence entre 0,6 et 0,9, typiquement entre 0,75 et 0,85.

Alternativement ou en combinaison, le rapport entre la longueur nominale T (figure 2) de la lèvre secondaire 5 et la longueur nominale S de la lèvre principale 4 peut être choisi supérieur ou égal à 1,2. La longueur nominale d'une lèvre est définie comme la longueur de la lèvre depuis la base de la lèvre 4-5 jusqu'à son extrémité distale 4a-5a, la base de la lèvre 4-5 étant définie par la droite Dp-Ds passant par le creux 6 de la partie en « V » 2 et la bavure 3p-3s jouxtant la lèvre 4-5. La lèvre principale 4 étant moins longue que la lèvre secondaire 5, les risques de coincement de la lèvre principale 4 dans la gorge sont réduits. Un coincement de la lèvre principale entre la gorge 20 et l'embout 30 empêcherait complètement l'emboîtement du connecteur. La qualité de l'étanchéité est aussi améliorée. Après la phase d'emboîtement, un contact entre la lèvre principale et la lèvre 22 empêcherait le passage du fluide à étancher dans la zone du V et donc un fonctionnement optimal du joint.

Par ailleurs, le rapport entre la distance U du creux 6 de la partie en « V » 2 au plan de joint P1 et la longueur nominale de la lèvre principale est être compris de préférence entre 0,4 et 0,45. En deçà de 0,40, le risque d'arrachement ou plus généralement de générer un défaut de surface sur la lèvre principale 4 au cours de la fabrication du joint 10 lors du démoulage (voir ci-après la description des figures 10 à 13) et lors d'emboîtements/déboîtements répétés des embout mâle et femelle du connecteur augmente. Au dessus de 0,45, la déformabilité de la lèvre principale 4 est diminuée et par conséquent les efforts d'emboîtement, augmentés. La hausse de la rigidité de la lèvre principale influence aussi la stabilité du joint lors du montage avec un risque plus élevé de basculement.

De plus, le rapport entre la hauteur A de la section du joint 10 au niveau du plan de joint P1 et la distance H entre le fond 22 de la gorge 21 et la paroi 31 du deuxième embout 30 du connecteur peut être choisi strictement inférieur à 1. Grâce à ce rapport, le joint n'est pas comprimé radialement, c'est-à-dire dans la direction de P1, par l'autre embout du connecteur, réduisant encore les efforts d'emboîtement. Pour plus de sécurité, le rapport H/A est choisi de préférence entre 0,7 et 0,98, et typiquement entre 0,8 et 0,9.

Ainsi, un joint tel que décrit précédemment permet une déformation de la lèvre principale 4 lors de l'emboîtement des deux embouts 20 et 30.

Dans un mode de réalisation préféré, le joint 10 présente une hauteur radiale maximale B entre les deux lèvres 4-5 et le taux de déformation de la lèvre principale 4 est compris entre 18% et 22% de la hauteur radiale maximale B. Ce taux permet une déformation suffisante pour réduire les efforts d'emboîtement tout en procurant une contrainte de la lèvre principale 4 contre l'autre embout 30 du connecteur adaptée à assurer l'étanchéité (voir figures 7 à 9).

Préférentiellement, le taux de déformation de la lèvre secondaire 5 est inférieur au taux de déformation de la lèvre principale 4. Ainsi, en se déformant, la lèvre secondaire 5 participe à l'élasticité générale du joint 10 mais du fait de son taux de déformation inférieur à celui de la lèvre principale 4, l'effort d'emboîtement est principalement exercé sur la lèvre principale 4 et peu transmis à la lèvre secondaire. L'épaisseur et la rigidité de la lèvre principale 4 engendrent une force de réaction qui plaque la lèvre principale 4 contre l'embout 30 et assure ainsi l'étanchéité contre la paroi 31. De l'autre côté, contre le fond 22 de la gorge 21, l'étanchéité est assurée par la compression du joint 10 monté en alésage. Le taux de déformation de la lèvre secondaire 5 peut être choisi préférentiellement entre 9% et 11 % de la hauteur radiale maximale B ;

Les efforts d'emboîtement peuvent également être réduits en diminuant les frottements entre le joint 10 d'un premier embout 20 et la face de contact du deuxième embout 30.

La base en « I » 1 et la lèvre principale 4 forment de préférence chacune un angle avec l'axe longitudinal P2 du joint 10, l'angle α1 de la base en « I » 1 étant inférieur à l'angle a2 de la lèvre principale 4. L'angle de la base en « I » 1 peut être supérieur ou égal à 2°. De plus, l'adaptation de cet angle α1 permet d'obtenir un volume de matière plus ou moins important pour le joint 10. Ainsi, plus cet angle est élevé, moins il y a de matière dans le joint. Or, plus le diamètre du connecteur augmente, plus le risque de vrillage du joint 10 dans la gorge 21 est d'autant plus important dans un montage alésage. Une augmentation de la quantité de matière diminue donc le risque de vrillage ce qui améliore la stabilité du joint au montage. Un angle α1 élevé sera donc préféré pour un joint destiné à un connecteur de faible diamètre et un angle α1 plus faible, jusqu'à 2°, sera préféré pour un joint destiné à un connecteur de diamètre important. L'angle α1 représente aussi une variable d'ajustement économique. Lorsque le coût du matériau est élevé, un angle α1 important pourra avoir un impact économique non négligeable.

L'angle de la lèvre principale peut être inférieur ou égal à 30°. Cet angle α2 est déterminé par des contraintes de procédé de fabrication. Au-delà de 30°, le démoulage du joint dans un moule à deux matrices devient délicat et les risques d'arrachement de la lèvre lors du démoulage sont accrus (voir ci-après la description des figures 10 à 13). Ce phénomène et donc les valeurs limites dépendent des matériaux utilisés.

Du côté du fond de la gorge 21, la base en « I » 1 et la lèvre secondaire 5 forment de préférence entre elles un angle α3 de telle sorte qu'une concavité 7 est ménagée entre les extrémités libres 1a et 5a de la base en « I » 1 et de la lèvre secondaire 5. Cette concavité permet d'une part au joint 10 d'être écrasable contre le fond 22 de la gorge 21 et, d'autre part, évite que les zones fonctionnelles de contact du joint 10 contre l'embout 20 sur lequel il est monté ne coïncident pas avec la position du plan de joint et de la bavure 3s. Cette concavité permet dans le cas d'un montage alésage de comprimer le joint sur son diamètre extérieur dans le fond de la gorge.

Afin de maintenir l'étanchéité lors de la compression du joint 10 contre le fond 22 de la gorge 21, la lèvre secondaire 5 et la base en « I » 1 présentent chacune à leur extrémité libre 5a et 1 a un lobe 5b-1b destiné à entrer en contact avec un fond d'une gorge. La limitation de la zone de contact à deux zones permet d'avoir localement des pressions de contact plus élevées sur chacune de ces zones.

Lorsque le joint selon l'invention est utilisé dans un connecteur pour réduire les efforts d'emboîtement des embouts mâle et femelle, il peut être monté « en alésage » comme exposé précédemment, ou « en piston », comme illustré en figure 4, c'est-à-dire que le joint 10 étant circulaire, la lèvre principale 4 est centrifuge et dirigée vers l'extérieur du joint 10, la lèvre secondaire 5 et la partie en « I » 1 étant serrées contre le fond 22' de la gorge 21' disposée à la périphérie extérieure de l'embout 20'.

De manière préférentielle, la largeur maximale de la gorge est légèrement supérieure à la longueur axiale X du joint 10 pour assurer un positionnement correct du joint dans la gorge.

Cependant, lors de l'emboîtement, une contrainte est exercée contre la lèvre principale 4 du joint 10 et transmise à l'ensemble du joint. Bien que flexible, le joint n'absorbe pas totalement cette contrainte et sa rigidité intrinsèque tend à faire basculer le joint. Afin de limiter ce phénomène, la lèvre secondaire 5 et/ou la base en « I », 1 peuvent présenter une face 5c-1c d'extrémité libre 5a-1a sensiblement plane.

D'une manière alternative représentée en figure 5, la base en « I » 1 peut présenter un lobe de calage 1d destiner à entrer en contact avec un bord 23 de la gorge 21 par contrainte du joint dans cette gorge, ce qui permet d'éviter un basculement du joint 10 lors de la phase d'emboîtement du connecteur mais nécessite de contraindre le joint dans la gorge. Ce lobe doit être défini de telle sorte qu'un serrage axial du joint est possible tout en conservant la capacité de serrage radial du joint. Pour cela le lobe 1d dépasse du lobe 1b, de telle sorte qu'un écart D soit suffisant pour assurer une précontrainte sur le joint pour le maintenir dans la gorge et ainsi éviter un basculement. Ce concept de pièce convient particulièrement pour des montages alésage.

La lèvre principale peut également présenter une face 4c d'extrémité libre 4a sensiblement plane qui permet de réduire les risques que le liquide passe entre la lèvre principale et la paroi dé l'embout contre laquelle elle est plaquée.

En référence aux figures 7 à 9, le joint 10 est monté « en piston » et disposé dans la gorge 21' d'un embout 20' de telle sorte que la partie en « V » 2 soit disposée dans une direction F1 opposée à la direction F2 de circulation du fluide sous pression. Lorsque le fluide circule (figure 9), la lèvre secondaire 5 et la lèvre principale 4 se plaquent contre la gorge 21' et l'autre embout 30 de manière à renforcer l'étanchéité ; la mise sous pression se fait donc dans la partie en « V » du joint.

Le joint type Y offre un potentiel de déformation important au niveau de la lèvre principale 4. Lors de l'emboîtement du connecteur (figure 8), celle-ci se déforme ce qui génère des efforts d'emboîtements faibles.

La mise sous pression peut ne s'effectuer que dans une seule direction. Il s'agit de la direction contraire au sens d'emboîtement. En d'autres termes, la pression est appliquée sur la partie en V du joint.

Le joint convient pour l'étanchéité de fluide (liquide de refroidissement, carburant, etc.) et de gaz (air, blow-by, etc.).

Le joint peut être conçu pour des pressions faibles (1-3 bars) et moyennes (jusqu'à 10-15 bars). La « tenue » à la pression est très dépendante du choix du matériau du joint. En effet, pour des pressions faibles, la dureté du matériau peut être choisie d'environs 60 Shore, alors que pour des pressions moyennes la dureté, du matériau peut être choisie d'environs 70 Shore. Pour des applications particulières, on peut mettre en oeuvre des matériaux de dureté Shore 80, voire 90. Ces valeurs peuvent alors être réduites de façon adaptée pour que les efforts d'emboîtement soient compatibles avec les valeurs souhaitées.

La mise sous pression peut également s'effectuer dans deux directions F1 et F2. Le joint selon l'invention peut alors assurer une fonction de membrane lorsque le fluide circule dans la même direction F1 que celle de l'orientation de la partie en « V » 2 et une fonction d'étanchéité lorsque le fluide circule dans la direction F2 opposée à celle F1 de l'orientation de la partie en « V » 2.

Une utilisation pour des étanchéités dynamiques avec des exigences de frottement faible peut également être envisagée dans le cas où la pression ne s'appliquerait que dans une seule direction, avec des exigences de frottement et d'abrasion plus faible.

En référence aux figures 10 à 13, le joint selon l'invention est fabriqué dans un moule 40 comprenant deux matrices 41 et 42.

La première matrice 41 est munie d'une première empreinte 41a de la forme de la base en « I » 1 et une deuxième matrice 42 munie d'une deuxième empreinte 42a de la forme de la partie en « V » 2. A l'interface des deux matrices 41 et 42 se trouve le plan de joint P1. Grâce à la conformation de ce moule 40, des bavures 3p, 3s de plan de joint étant localisées entre la base en « I » et la partie en « V », sensiblement perpendiculairement à l'axe longitudinale du joint P2. De cette manière, les bavures 3p, 3s ne se trouvent pas sur une partie fonctionnelle du joint 10, c'est-à-dire ni sur les lèvres ni entre elles dans le creux qui les sépare.

De préférence, la profondeur des deux empreintes 41 a et 42a est sensiblement égale de manière à former des bavures de plan de joint sensiblement au milieu du joint.

La première étape de fabrication du joint 10 avec le moule 40 consiste à plaquer les deux matrices 41 et 42 l'une contre l'autre de sorte que les empreintes 41 a et 42a soient en regard l'une de l'autre (figure 1). Puis du matériau polymère 11 non réticulé est injecté dans les empreintes 41 a et 42a du (figure 11). Enfin, le joint peut être démoulé en écartant les matrices l'une de l'autre à l'opposé de la flèche F3 à partir du moment où le niveau de réticulation du matériau polymère 11 est suffisant pour que les lèvres principales 4 et secondaires 5 puissent se déformer lors du démoulage et reprendre leur forme de moulage après le démoulage.

L'invention n'est pas limitée aux exemples de réalisation décrits et représentés :
- des modifications géométriques peuvent être réalisées pour que le joint puisse être utilisé dans des gorges roulées.

Dans le cas d'un montage piston, le diamètre intérieur du joint est étiré. L'étirement minimum (calcul de tolérances) est de préférence de 3%. L'étirement maximum doit être inférieur à 10%. Dans le cas d'un montage alésage, le diamètre extérieur du joint doit être comprimé, c'est de cette compression que dépend la stabilité du joint dans sa gorge. Cette compression ne peut pas être quantifiée car elle dépend du matériau et du rapport diamètre intérieur du joint /section du joint. On s'attachera à avoir un rapport < 10 ou le plus proche de cette valeur.

Le serrage maximal acceptable par le joint type Y est d'environ 30%.

## Revendications

1. Joint d'étanchéité (10) en matériau déformable élastiquement de section axiale longitudinale en forme de « Y » pour connecteur rapide de conduites de fluide, le joint (10) comprenant une base en « I » (1) et une partie en « V » (2) déterminant une lèvre principale (4) et une lèvre secondaire (5), des bavures (3p, 3s) de plan de joint (P1) étant localisées entre la base en « I » (1) et la partie en « V » (2), de préférence sensiblement perpendiculairement à l'axe longitudinal (P2) du joint (10), **caractérisé en ce que** la lèvre secondaire (5) et la base en « I » (1) présentent chacune à leur extrémité libre (1à, 5a) un lobe (1b,5b) destiné à entrer en contact avec un fond (22) d'une gorge (21).

2. Joint d'étanchéité selon la revendication 1, dans lequel la base en « I » (1) et la partie en « V » (2) présentent de longueurs axiales maximales (X/2) sensiblement égales, les bavures (3p, 3s) de plan de joint étant localisées entre la base en « I » et la partie en « V », sensiblement au milieu du joint.

3. Joint d'étanchéité selon l'une quelconque des revendications 1 ou 2, dans lequel le rapport entre la longueur nominale (T) de la lèvre secondaire (5) et la longueur nominale (S) de la lèvre principale (4) étant choisi supérieur ou égal à 1,2 et au plus égal à deux.

4. Joint d'étanchéité selon l'une quelconque des revendications 1 à 3, dans lequel le rapport entre la longueur axiale longitudinale (Z) de la lèvre principale (4) et la longueur axiale longitudinale (X/2) de la lèvre secondaire (5) est choisi strictement inférieur à 1, de préférence entre 0,6 et 0,9, typiquement entre 0,75 et 0,85. ;

5. Joint d'étanchéité selon l'une quelconque des revendications 1 à 4, dans lequel le rapport entre la distance (U) du creux (6) de la partie en « V » (2) au plan de joint et la longueur nominale (S) de la lèvre principale (4) est compris entre 0,4 et 0,45.

6. Joint d'étanchéité selon l'une quelconque des revendications 1 à 5, présentant une hauteur radiale maximale (B) entre les deux lèvres (4,5), dans lequel le taux de déformation de la lèvre principale (5) est compris entre 18% et 22% de la hauteur radiale maximale (B).

7. Joint d'étanchéité selon la revendication 6, dans lequel le taux de déformation de la lèvre secondaire (5) est inférieur au taux de déformation de la lèvre principale (4).

8. Joint d'étanchéité selon la revendication 7, dans lequel le taux de déformation de la lèvre secondaire (5) est compris entre 9% et 11 % de la hauteur radiale maximale (B).

9. Joint d'étanchéité selon l'une quelconque des revendications 1 à 8, dans lequel la base en « I » (1) et la lèvre principale (4) forment chacune respectivement un angle avec l'axe longitudinal (P₂) du joint, l'angle (α₁) de la base en « I » (1) étant inférieur à l'angle (α₂) de la lèvre principale (4).

10. Joint d'étanchéité selon la revendication 9, dans lequel l'angle (α1) de la base en « I » (1) est supérieur ou égal à 2°, et l'angle (α2) de la lèvre principale (4) est inférieur ou égal à 30°.

11. Joint d'étanchéité selon l'une quelconque des revendications 1 à 10, dans lequel la base en « I » (1) et la lèvre secondaire (5) forment entre elles un angle (α3) de telle sorte qu'une concavité (7) est ménagée entre les extrémités libres (1a, 5a) de la base en « I » (1) et de la lèvre secondaire (5).

12. Joint d'étanchéité selon l'une quelconque des revendications 1 à 11, dans lequel la lèvre principale (4) présente une face (4c) d'extrémité libre (4a) sensiblement plane.

13. Joint d'étanchéité selon l'une quelconque des revendications 1 à 12, dans lequel la lèvre secondaire (5) présente une face (5c) d'extrémité libre (5a) sensiblement plane.

14. Joint d'étanchéité selon l'une quelconque des revendications 1 à 13, dans lequel la base en « I » (1) présente une face (1c) d'extrémité libre (1a) sensiblement plane.

15. Joint d'étanchéité selon l'une quelconque des revendications 1 à 13, dans lequel la base en « I » (1) présente un lobe de calage (1d) destiner à entrer en contact avec un bord (28) d'une gorge (21) par contrainte du joint dans cette gorge.

16. Joint d'étanchéité selon l'une quelconque des revendications 1 à 15 dont le matériau est choisi parmi les matériaux polymères, en particulier parmi le FPM, le HNBR, le AEM, le ACM, le NBR et le EPDM.

17. Utilisation d'un joint d'étanchéité selon l'une quelconque des revendications 1 à 16, dans un connecteur de conduites de fluide, comprenant un embout mâle (30) et un embout femelle (20), pour réduire les efforts d'emboîtement des embouts mâle et femelle.

18. Utilisation selon la revendication 17, dans laquelle le joint (10) est disposé dans une gorge (21) d'un embout de sorte que la lèvre secondaire (5) prenne appui contre un fond (22) de la gorge (21).

19. Utilisation selon la revendication 18, dans laquelle le rapport entre la hauteur (A) de la section du joint au niveau du plan de joint et la distance (H) entre le fond de la gorge et la paroi de deuxième embout est choisi strictement inférieur à 1, typiquement entre 0,6 et 0,9, de préférence entre 0,75 et 0,85.

20. Utilisation selon la revendication 18 dans un connecteur de conduites d'un fluide sous pression, dans lequel le joint est disposé dans la gorge d'un embout (20,30) de telle sorte que la partie en « V » soit disposée dans une direction opposée à la direction de circulation du fluide sous pression et que, lorsque le fluide circule, la lèvre principale (4) et la lèvre secondaire (5) se plaquent respectivement contre la gorge (21) et l'autre embout (20, 30) de manière à renforcer l'étanchéité.

21. moule (40) de fabrication d'un joint d'étanchéité selon l'une quelconque des revendications 1 à 16, comprenant une première matrice (41) munie d'une première empreinte (41a) de la forme de la base en « I » (1) et une deuxième matrice (42) munie d'une deuxième empreinte (42a) de la forme de la partie en «V » (2) définissant une lèvre principale (4) et une lèvre secondaire (5), la profondeur des deux empreintes étant sensiblement telle que des bavures (3r, 3s) de plan de joint sont localisées entre la base en « I » et la partie en « V », **caractérisé en ce que** la lèvre secondaire (5) et la base en « I » (1) présentent chacune à leur extrémité libre (1a, 5a) un lobe (1b, 5b) destiné à entrer en contact avec un fond (22) d'une gorge (21).

## Claims

1. A sealing gasket of elastically deformable material having a Y-shaped longitudinal axial section for use in a quick coupling for a fluid duct, the gasket (10) comprising an I-shaped stem (1) and a V-shaped portion (2), flash (3p, 3s) of join plane (P1) of the gasket being located between the I-shaped stem (1) and the V-shaped portion (2), preferably substantially perpendicularly to the longitudinal axis (P2) of the gasket (10), **characterized in that** the secondary lip (5) and the I-shaped stem (1) present respective lobes (1b, 5b) at their free ends (1a, 5a) for coming into contact with a groove (21) bottom (22).

2. A sealing gasket according to claim 1, wherein the I-shaped stem (1) and the V-shaped portion (2) present maximum axial lengths (X/2) that are substantially equal, the flash (3p, 3s) of join plane being located between the I-shaped stem and the V-shaped portion, substantially in the middle of the gasket.

3. A sealing gasket according to claim 1 or claim 2 wherein the ratio of the nominal length (T) of the secondary lip (5) to the nominal length (S) of the main lip (4) being selected to be greater than or equal to 1.2, and no greater than two.

4. A sealing gasket according to any one of claims 1 to 3, wherein the ratio of the length (Z) of the main lip (4) in the longitudinal axis direction to the length (X/2) of the secondary lip (5) in the longitudinal axial direction is selected to be strictly less than 1, preferably to lie in the range 0.6 to 0.9, typically in the range 0.75 to 0.85.

5. A sealing gasket according to any one of claims 1 to 4, wherein the ratio of the distance (U) between the recess (6) in the V-shaped portion and the join plane to the nominal length (S) of the main lip (4) lies in the range 0.4 to 0.45.

6. A sealing gasket according to any one of claims 1 to 5, presenting a maximum radial height (B) between the two lips (4,5), wherein the amount of deformation of the main lip (4) lies in the range 18% to 22% of the maximum radial height (B).

7. A sealing gasket according to claim 6, wherein the amount of deformation of the secondary lip (5) is less than the amount of deformation of the main lip (4).

8. A sealing gasket according to claim 7, wherein the amount of deformation of the secondary lip (5) lies in the range 9% to 11 % of the maximum radial height (B).

9. A sealing gasket according to any one of claims 1 to 8, wherein the I-shaped stem (1) and the main lip (4) form respective angles with the longitudinal axis (P2) of the gasket, the angle (α1) of the I-shaped stem (1) being smaller than the angle (α₂) of the main lip (4).

10. A sealing gasket according to claim 9, wherein the angle (α₁) of the I-shaped stem (1) is greater than or equal to 2°, and the angle (α₂) of the main lip (4) is less than or equal to 30°.

11. A sealing gasket according to any one of claims 1 to 10, wherein the I-shaped stem (1) and the secondary lip (4) form between them an angle (α₃) such that a concave side (7) is provided between the free end (1a) of the I-shaped stem (1) and the free end (5a) of the secondary lip (5).

12. A sealing gasket according to any one of claims 1 to 11, wherein the main lip (4) presents a free end face (4a) that is substantially plane.

13. A sealing gasket according to any one of claims 1 to 12, wherein the secondary lip (5) presents a free end face (5c) that is substantially plane.

14. A sealing gasket according to any one of claims 1 to 13, wherein the I-shaped stem (1) presents a free end face (1c) that is substantially plane.

15. A sealing gasket according to any one of claims 1 to 14, wherein the I-shaped stem (1) presents a wedging lobe (1d) for coming into contact with a groove (21) edge (23) by stressing the gasket in the groove.

16. A sealing gasket according to any one of claims 1 to 15, wherein its material is selected from polymer materials, in particular from: FPM; HNBR; AEM; ACM; NBR; and EPDM.

17. A use of a sealing gasket according to any one of claims 1 to 16, in a fluid duct connector comprising a male endpiece (30) and a female endpiece (20), for the purpose of reducing the engagement forces for the male and female endpieces.

18. A use according to claim 17, wherein the gasket (10) is placed in a groove (21) in an endpiece such that the secondary lip (5) bears against the bottom (22) of the groove (21).

19. A use according to claim 18, wherein the ratio of the height (A) of the gasket section in the joint plane to the distance (H) between the bottom of the groove and the wall of the second endpiece is selected to be strictly less than 1, typically to lie in the range 0.7 to 0.98, and preferably in the range 0.8 to 0.9.

20. A use according to claim 18, in a connector for a pressurized fluid duct, wherein the gasket is placed in the groove of an endpiece (20, 30) such that the V-shaped portion is disposed in a direction opposite to the pressurized fluid flow direction, and when the fluid flows, the main lip (4) and the secondary lip (5) are pressed respectively against the groove (21) and against the other endpiece (20, 30) so as to reinforce sealing.

21. A mold (40) for fabricating a sealing gasket according to any one of claims 1 to 16, comprising a first matrix (41) provided with a first cavity (41a) in the form of the I-shaped stem (1), and a second matrix (42) provided with a second cavity (42a) in the form of the V-shaped portion (2), the depths of the two cavities being substantially such that the flashes (3p, 3s) in the join plane are located between the I-shaped stem and the V-shaped portion, **characterized in that** the secondary lip (5) and the I-shaped stem (1) present respective lobes (1b, 5b) at their free ends (1a, 5a) for coming into contact with a groove (21) bottom (22).

## Patentansprüche

1. Dichtung (10) aus einem elastisch verformbaren Material mit Y-förmigem Längsachsenquerschnitt für einen Fluidleitungsschnellverbinder, wobei die Dichtung (10) umfasst: eine I-förmige Basis (1) und einen V-förmigen Abschnitt (2), welcher eine Hauptlippe (4) und eine Sekundärlippe (5) bestimmt, wobei Formgrate (3p, 3s) einer Dichtungsebene (P1) sich zwischen der I-förmigen Basis (1) und dem V-förmigen Abschnitt (2) befinden, vorzugsweise im Wesentlichen senkrecht zu der Längsachse (P2) der Dichtung (10), **dadurch gekennzeichnet, dass** die Sekundärlippe (5) und die I-förmige Basis jeweils an ihrem freien Ende (1a, 5a) eine Keule (1b, 5b) aufweisen, welche dazu bestimmt ist, mit einem Boden (22) einer Kehle (21) in Kontakt zu kommen.

2. Dichtung nach Anspruch 1, wobei die I-förmige Basis (1) und der V-förmige Abschnitt (2) im Wesentlichen gleiche axiale Maximallängen (X/2) aufweisen, wobei die Formgrate (3p, 3s) der Dichtungsebene sich zwischen der I-förmigen Basis und dem V-förmigen Abschnitt, im Wesentlichen in der Mitte der Dichtung, befinden.

3. Dichtung nach einem der Ansprüche 1 oder 2, wobei das Verhältnis zwischen der Nominallänge (T) der Sekundärlippe (5) und der Nominallänge (S) der Hauptlippe (4) größer oder gleich 1,2 und höchstens gleich 2 gewählt ist.

4. Dichtung nach einem der Ansprüche 1 bis 3, wobei das Verhältnis zwischen der Längsachsenlänge (Z) der Hauptlippe (4) und der Längsachsenlänge (X/2) der Sekundärlippe (5) streng kleiner als 1, vorzugsweise zwischen 0,6 und 0,9, typischerweise zwischen 0,75 und 0,85, gewählt ist.

5. Dichtung nach einem der Ansprüche 1 bis 4, wobei das Verhältnis zwischen dem Abstand (U) der Vertiefung (6) des V-förmigen Abschnitts (2) zu der Dichtungsebene und der Nominallänge (S) der Hauptlippe (4) zwischen 0,4 und 0,45 enthalten ist.

6. Dichtung nach einem der Ansprüche 1 bis 5, welche eine Maximalradialhöhe (B) zwischen den zwei Lippen (4, 5) aufweist, bei welcher die Verformungsrate der Hauptlippe (4) zwischen 18% und 22% der Maximalradialhöhe (B) enthalten ist.

7. Dichtung nach Anspruch 6, wobei die Verformungsrate der Sekundärlippe (5) geringer ist als die Verformungsrate der Hauptlippe (4).

8. Dichtung nach Anspruch 7, wobei die Verformungsrate der Sekundärlippe (5) zwischen 9% und 11% der Maximalradialhöhe (B) enthalten ist.

9. Dichtung nach einem der Ansprüche 1 bis 8, wobei die I-förmige Basis (1) und die Hauptlippe (4) jeweils einen Winkel mit der Längsachse (P₂) der Dichtung bilden, wobei der Winkel (α1) der I-förmigen Basis (1) kleiner ist als der Winkel (α₂) der Hauptlippe (4).

10. Dichtung nach Anspruch 9, wobei der Winkel (α₁) der I-förmigen Basis (1) größer oder gleich 2° ist und der Winkel (α₂) der Hauptlippe (4) kleiner oder gleich 30° ist.

11. Dichtung nach einem der Ansprüche 1 bis 10, wobei die I-förmige Basis (1) und die Sekundärlippe (5) untereinander derart einen Winkel (α₃) bilden, dass eine Vertiefung (7) zwischen den freien Enden (1a, 5a) der I-förmigen Basis (1) und der Sekundärlippe (5) ausgespart ist.

12. Dichtung nach einem der Ansprüche 1 bis 11, wobei die Hauptlippe (4) eine im Wesentlichen ebene Fläche (4c) des freien Endes (4a) aufweist.

13. Dichtung nach einem der Ansprüche 1 bis 12, wobei die Sekundärlippe (5) eine im Wesentlichen ebene Fläche (5c) des freien Endes (5a) aufweist.

14. Dichtung nach einem der Ansprüche 1 bis 13, wobei die I-förmige Basis (1) eine im Wesentlichen ebene Fläche (1c) des freien Endes (1a) aufweist.

15. Dichtung nach einem der Ansprüche 1 bis 13, wobei die I-förmige Basis (1) eine Verkeilungskeule (1d) aufweist, welche dazu bestimmt ist, durch Einzwängen der Dichtung in einer Kehle (21) in Kontakt mit einem Rand (23) dieser Kehle zu kommen.

16. Dichtung nach einem der Ansprüche 1 bis 15, deren Material ausgewählt ist aus Polymermaterialien, insbesondere aus FPM, HNBR, AEM, ACM, NBR und EPDM.

17. Verwendung einer Dichtung nach einem der Ansprüche 1 bis 16 in einem Fluidleitungsverbinder, welcher ein männliches Ansatzstück (30) und ein weibliches Ansatzstück (20) umfasst, um die Einfügungsbeanspruchungen des männlichen und weiblichen Ansatzstücks zu reduzieren.

18. Verwendung nach Anspruch 17, wobei die Dichtung (10) derart in einer Kehle (21) eines Ansatzstücks angeordnet ist, dass die Sekundärlippe (5) gegen einen Boden (22) der Kehle (21) anlehnt.

19. Verwendung nach Anspruch 18, wobei das Verhältnis zwischen der Höhe (A) des Querschnitts der Dichtung auf Höhe der Dichtungsebene und dem Abstand (H) zwischen dem Boden der Kehle und der Rand des zweiten Ansatzstücks streng kleiner als 1, typischerweise zwischen 0,6 und 0,9, vorzugsweise zwischen 0,75 und 0,85, gewählt ist.

20. Verwendung nach Anspruch 18 in einem Druckfluidleitungsverbinder, wobei die Dichtung derart in der Kehle eines Ansatzstücks (20, 30) angeordnet ist, dass der V-förmige Abschnitt in einer entgegengesetzten Richtung zu der Zirkulationsrichtung des Druckfluids angeordnet ist und dass, wenn das Fluid zirkuliert, die Hauptlippe (4) und die Sekundärlippe (5) sich jeweils gegen die Kehle (21) und das andere Ansatzstück (20, 30) legen, so dass die Abdichtung verstärkt wird.

21. Form (40) zur Herstellung einer Dichtung nach einem der Ansprüche 1 bis 16, umfassend eine erste Matrize (41), welche versehen ist mit einer ersten Prägung (41a) der Form der I-förmigen Basis (1), und eine zweite Matrize (42), welche versehen ist mit einer zweiten Prägung (42a) der Form des V-förmigen Abschnitts (2), welcher eine Hauptlippe (4) und eine Sekundärlippe (5) definiert, wobei die Tiefe der zwei Prägungen im Wesentlichen derart ist, dass die Formgrate (3p, 3s) der Dichtungsebene sich zwischen der I-förmigen Basis und dem V-förmigen Abschnitt befinden, **dadurch gekennzeichnet, dass** die Sekundärlippe (5) und die I-förmige Basis (1) jeweils an ihrem freien Ende (1a, 5a) eine Keule (1b, 5b) aufweisen, welche dazu bestimmt ist mit einem Boden (22) einer Kehle (21) in Kontakt zu kommen.
